# FASCICULE DE BREVET EUROPEEN

(11) **EP 2 588 780 B1**
(45) Date de publication et mention de la délivrance du brevet: **04.05.2016**
(21) Numéro de dépôt: 11740960.7
(22) Date de dépôt: 27.06.2011
(51) Int. Cl.: F16K 1/226, F16K 27/02, F02D 9/10, F02M 26/00, F16K 1/22, F16K 11/052

(54) **VANNE DE CIRCULATION DE FLUIDE**
FLÜSSIGKEITSVENTIL
FLUID VALVE

(30) Priorité: 30.06.2010 FR 1002768
(43) Date de publication de la demande: 08.05.2013
(73) Titulaire: Valeo Systèmes de Contrôle Moteur, 95800 Cergy (FR)
(72) Inventeur: ADENOT, Sébastien, F-95300 Pontoise (FR); HODEBOURG, Grégory, F-78500 Sartrouville (FR)
(74) Mandataire: Cardon, Nicolas
(86) Numéro de dépôt international: PCT/FR2011/051486
(87) Numéro de publication internationale: WO 2012/001283

(56) Documents cités:
- FR-A1- 2 894 315
- FR-A1- 2 933 469

## Description

La présente invention concerne une vanne de circulation de fluide, notamment, de gaz d'échappement d'un moteur de véhicule automobile ou d'un mélange d'air frais et de gaz d'échappement.

Ladite vanne pourra ainsi servir à régler un débit de gaz d'échappement destiné à être recirculé vers la ligne d'admission en air du moteur. En particulier, elle pourra être utilisée dans des architectures moteur, notamment diesel, à turbo compresseur, ladite vanne étant prévue sur la ligne d'échappement du moteur en aval de la turbine du turbo compresseur pour prélever une partie des gaz.

Il a déjà été proposé, notamment dans la demande de brevet FR 2933469 A1, une vanne comprenant un corps définissant un conduit principal, pour l'écoulement des gaz d'échappement, et un conduit auxiliaire, débouchant dans ledit conduit principal et permettant de prélever la partie des gaz d'échappement destinée à être dirigée vers l'admission du moteur. Ladite vanne comprend un volet mobile entre une position de fermeture, empêchant la communication entre les deux conduits, et une position d'ouverture, permettant la mise en communication desdits conduits. Elle comprend aussi un joint d'étanchéité sur lequel le volet est en appui lorsqu'il est en position de fermeture. Un moteur d'actionnement du volet est prévu et le corps de la vanne comprend un logement pour l'accueillir.

Les gaz d'échappement circulant dans la vanne présentent une température de plusieurs centaines de degrés et une difficulté à surmonter dans une telle configuration est de protéger le moteur d'actionnement du volet. Pour cela, il est habituellement prévu de réaliser des conduits de refroidissement dans le corps de la vanne. Cependant, une telle solution augmente son encombrement et entraine une augmentation du débit à assurer dans le circuit de refroidissement utilisé.

La présente invention a pour but de remédier à ces inconvénients et propose pour cela une vanne de circulation de fluide, notamment de gaz d'échappement d'un moteur de véhicule automobile, comprenant un corps définissant un conduit principal et un conduit auxiliaire d'écoulement du fluide, débouchant dans ledit conduit principal, ladite vanne comprenant en outre un volet mobile entre une position, dite de fermeture, empêchant la communication entre les deux conduits, et une position, dite d'ouverture, permettant la mise en communication desdits conduits, et un joint d'étanchéité sur lequel le volet est en appui lorsqu'il est en position de fermeture, ledit corps comprenant un logement pour un moteur d'actionnement du volet.

Selon l'invention, ledit corps est configuré pour définir une lame de fluide entre ledit joint et ledit logement. On améliore ainsi l'isolation thermique du moteur d'actionnement du volet et les besoins en refroidissement de la vanne sont diminués. Ceci permet d'optimiser son dimensionnement. On peut aussi de la sorte faire appel à des moteurs de technologie moins perfectionnée car ne devant pas résister à de très hautes températures.

Selon différents mode de réalisation de l'invention,
- ledit corps définit une cuvette entre ledit joint et ledit logement, ledit corps comprenant une paroi entre ledit logement et un fond de ladite cuvette, prévu plat ;
- ledit joint présente une ouverture pour le passage du fluide d'un conduit à l'autre et le volet est muni d'une première et d'une deuxième aile, ladite première aile, dite aile d'obturation, permettant de fermer ladite ouverture, lorsque le volet est en position de fermeture, et ladite seconde aile, dite autre aile, permettant de fermer au moins partiellement ledit premier conduit, lorsque le volet est en position d'ouverture ;
- ledit joint présente une zone borgne, située en vis-à-vis de ladite autre aile lorsque le volet est en position de fermeture ;
- ladite lame de fluide est prévue entre ladite zone borgne du joint et ledit corps ;
- ledit joint et le fond de ladite cuvette sont prévus parallèles l'un à l'autre ;
- ledit corps comprend deux parties distinctes, assujetties l'une à l'autre, chaque partie définissant un desdits conduits, et présentant une ouverture venant en correspondance pour définir une fenêtre de passage du fluide d'un conduit à l'autre, l'ouverture dudit joint d'étanchéité étant positionnée au niveau de ladite fenêtre ;
- ladite cuvette est définie par la partie définissant le conduit auxiliaire ;
- ladite partie définissant le conduit auxiliaire définit en outre ledit logement pour le moteur ;
- lorsque le volet est en position de fermeture, ladite aile d'obturation et l'autre desdites ailes sont prévues de part et d'autre du joint, ledit volet comprenant une zone intermédiaire, reliant ladite première et ladite seconde aile, traversant ladite ouverture du joint ;
- ledit joint comprend une zone plane présentant une surface contre laquelle ladite aile d'obturation vient en appui par l'une de ses faces, prévue plane, dit face d'appui de l'aile d'obturation, et une surface opposée contre laquelle l'autre aile du volet vient en appui, par l'une de ses faces, prévue plane, dite face d'appui de l'autre aile, lorsque le volet est en position de fermeture, ladite ouverture pour le passage du fluide prévue dans le joint étant positionnée au niveau de ladite zone plane ;
- ladite surface d'appui de l'aile d'obturation et ladite surface d'appui de l'autre aile du volet s'étendent selon deux plans parallèles distants l'un de l'autre ;
- lesdits plans sont distants d'une dimension correspondant à l'épaisseur du joint dans ladite zone plane ;
- l'autre aile du volet présente une surface opposée à sa surface d'appui, plane, et la zone intermédiaire présente un pan incliné entre la face d'appui de l'aile d'obturation et ladite face opposée ;
- la vanne comprend, à proximité de la zone intermédiaire du volet, un axe d'articulation du volet, prévu excentré par rapport audit volet, et, selon la direction de l'axe d'articulation du volet, ladite aile d'obturation présente une dimension s'étendant de part et d'autre au-delà de la dimension selon laquelle s'étend la zone intermédiaire, au moins au niveau d'une zone de jonction entre ladite zone intermédiaire et ladite aile d'obturation ;
- ledit joint présente un bossage le long d'une partie de l'ouverture de passage, prévue en vis-à-vis de l'autre aile du volet quand celui-ci est en position de fermeture, ledit bossage étant configuré pour être comprimé par ladite autre aile du volet quand celui-ci est en position de fermeture.

L'invention sera mieux comprise à la lumière de la description suivante qui n'est donnée qu'à titre indicatif et qui n'a pas pour but de la limiter, accompagnée des dessins joints parmi lesquels :
- la figure 1 illustre en perspective un exemple de réalisation d'une vanne conforme à l'invention,
- la figure 2 illustre en perspective une partie de la vanne de la figure 1,
- la figure 3 est une vue de coupe de la vanne des figures précédentes, la coupe étant effectuée selon un plan de coupe orthogonale à l'axe d'articulation du volet, le volet étant en position partiellement ouverte,
- la figure 4 illustre en perspective le joint d'étanchéité et le volet de la vanne des figures précédentes, le volet étant en position de fermeture.

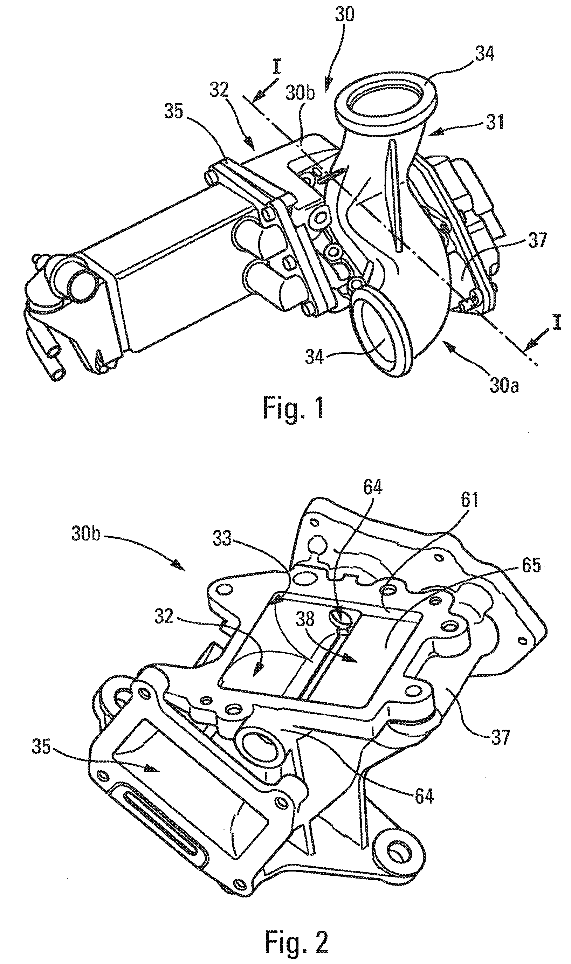

Comme illustré par les figures 1 à 3, la vanne conforme à l'invention comprend un corps 30 définissant un conduit principal 31 et un conduit auxiliaire 32 d'écoulement du fluide, débouchant dans ledit conduit principal 31. Le conduit principal 31 présente, par exemple, des orifices 34 d'entrée et de sortie communiquant, dans un exemple d'application, avec la ligne d'échappement d'un moteur. Le conduit auxiliaire présente un orifice 35 communiquant, dans le même exemple d'application, avec une ligne de recirculation de gaz d'échappement.

Ladite vanne comprend en outre un volet 1 et un joint d'étanchéité 2.

Ledit volet 1 est prévu mobile entre une position de fermeture, empêchant la communication entre les deux conduits 31, 32, et une position d'ouverture, permettant la mise en communication desdits conduits 31, 32, par exemple au niveau d'une fenêtre 33 de passage du fluide.

Ledit corps 30 comprend en outre, par exemple, un logement 37 pour un moteur d'actionnement du volet. Et ladite vanne pourra comprendre un système de transmission, non-représenté, entre un arbre de sortie du moteur et un arbre 21 d'articulation du volet.

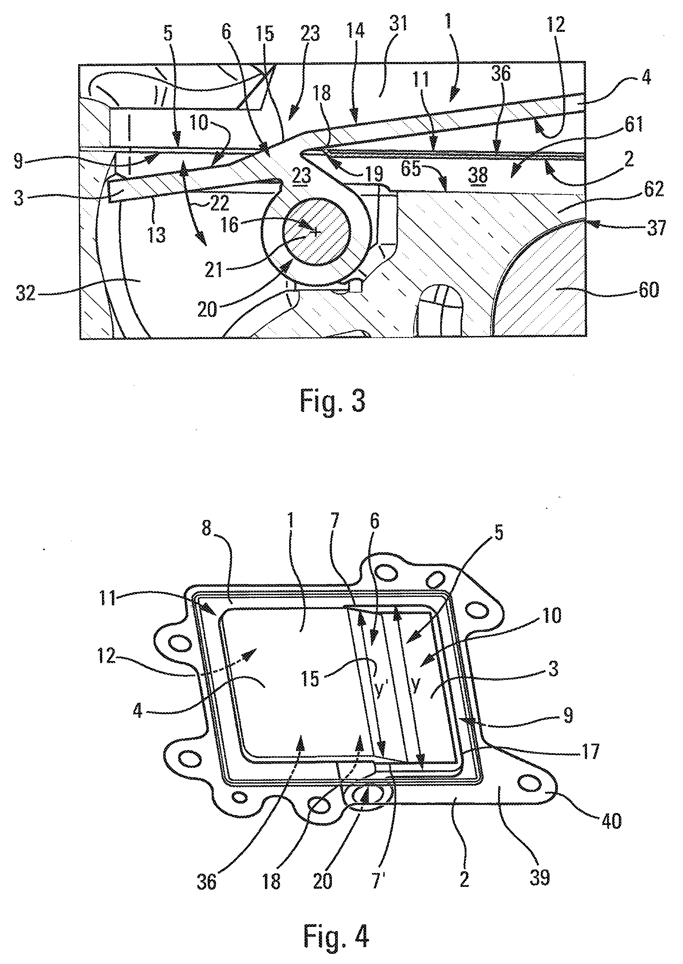

Comme visible aux figures 2 et 3, selon l'invention, ledit corps 30 est configuré pour définir une lame de fluide 38 entre ledit joint 2 et ledit logement 37. On améliore de la sorte l'isolation thermique du moteur 60 d'actionnement du volet.

Ledit corps 30 pourra être réalisé en deux parties 30a, 30b, chaque partie définissant un desdits conduits, et présentant une ouverture venant en correspondance pour définir ladite fenêtre 33. On entend par là que lesdites deux parties du corps 30 sont distinctes, assujetties l'une à l'autre. Ledit joint d'étanchéité 2 joue alors aussi un rôle d'étanchéité entre lesdites deux parties 30a, 30b vis-à-vis de l'extérieur de la vanne.

Ledit corps 30 définit, par exemple, une cuvette 61 entre ledit joint 2 et ledit logement 37, ledit corps comprenant une paroi 62 entre ledit logement 37 et un fond 65 de ladite cuvette 61. Le fond 65 de ladite cuvette 61 pourra être prévu plat.

Ladite cuvette 61 et ledit logement 37 pour le moteur sont définis, par exemple, par la partie définissant le conduit auxiliaire 32.

Le joint 2 présente une ouverture 5 pour le passage du fluide du conduit 31 à l'autre 32. Ladite ouverture 5 du joint est prévue, notamment, en vis-à-vis de la fenêtre 33 du corps 30. Le volet 1 est muni, par exemple, d'une première aile 3 et d'une deuxième aile 4.

Ladite première aile 3, dite aile d'obturation, permet de fermer l'ouverture 5 du joint, lorsque le volet est en position de fermeture, et ladite seconde aile 4, dite autre aile, permet de fermer au moins partiellement ledit premier conduit 31, lorsque le volet est en position d'ouverture. L'autre aile 4 du volet participe ainsi à l'isolation thermique du moteur

Ledit joint 2 présente, notamment, une zone borgne 36, située en vis-à-vis de ladite autre aile 4 lorsque le volet 1 est en position de fermeture. Autrement dit, l'ouverture 5 du joint n'est prévue qu'au niveau de l'aile d'obturation 3, le volet 1 étant en position de fermeture. Et la lame de fluide 38 est prévue entre ladite zone borgne 36 du joint et ledit logement 37.

Dans une position d'ouverture du volet, ladite première 3 et ladite seconde aile 4 s'étendent d'un côté et de l'autre du joint d'étanchéité 2, de façon transversale à celui-ci pour laisser passer le fluide. Dans le mode de réalisation illustré, le volet 1 est incliné par rapport au joint 2 dans sa position d'ouverture maximale, non représentée.

Comme illustré à la figure 4, ladite aile d'obturation 3 et l'autre 4 desdites ailes sont prévues, par exemple, de part et d'autre du joint 2, lorsque le volet est en position de fermeture, et ledit volet 2 comprend une zone intermédiaire 6, reliant ladite première 3 et ladite seconde 4 aile, traversant ladite ouverture du joint, par exemple de façon affleurante, au niveau de zones 7, 7' du contour de ladite ouverture 5 du joint.

On peut ainsi obtenir une étanchéité autour de l'ouverture 5 du joint tout en autorisant le débattement du volet entre sa position d'ouverture et sa position de fermeture sans avoir à laisser des jeux importants entre l'ouverture du joint et le contour du volet.

Ledit joint 2 comprend une zone plane 8 et, si l'on revient à la figure 3, on constate que ladite zone plane présente une surface 9 contre laquelle ladite aile d'obturation 3 vient en appui par l'une 10 de ses faces, prévue plane, dit face d'appui de l'aile d'obturation, et/ou une surface opposée 11 contre laquelle l'autre aile 4 du volet vient en appui, par l'une 12 de ses faces, prévue plane, dite face d'appui de l'autre aile, lorsque le volet est en position de fermeture. Ladite ouverture 5 pour le passage du fluide prévue dans le joint 2 est positionnée au niveau de ladite zone plane 8. L'étanchéité est ainsi réalisée par un contact face contre face au niveau de la ou desdites ailes.

Ladite zone borgne 36 du joint 2 pourra aussi être localisée au niveau de ladite zone plane 8 dudit joint 2 dans laquelle est formée l'ouverture 5 dudit joint. Le fond 65 de ladite cuvette 61 et ladite zone borgne 36 sont prévus, par exemple, parallèles l'un à l'autre.

Ladite surface d'appui 10 de l'aile d'obturation et ladite surface d'appui 12 de l'autre aile du volet s'étendent, par exemple, selon deux plans parallèles distants l'un de l'autre, par exemple d'une dimension correspondant à l'épaisseur du joint dans ladite zone plane 8. On peut ainsi assurer des contacts du type plan sur plan.

L'aile d'obturation 3 présente une surface 13, opposée à sa surface d'appui 10, et l'autre aile 4 présente une surface 14 opposée à sa surface d'appui 12. Ces deux faces opposées 13, 14 sont, par exemple, planes et la zone intermédiaire 6 présente un pan incliné 15 entre la face d'appui 10 de l'aile d'obturation 3 et ladite face opposée 14 de l'autre aile 4. On favorise de la sorte l'écoulement du fluide à la surface du volet.

La vanne pourra aussi comprendre un axe d'articulation 16 du volet 1, prévu excentré par rapport audit volet 1 et situé, par exemple, à proximité de la zone intermédiaire 6 du volet.

Ledit joint 2 présente un bossage 19 le long d'une partie de l'ouverture 5 du joint, prévu en vis-à-vis de l'autre aile 4 du volet, quand celui-ci est en position de fermeture. Ledit bossage est configuré pour être comprimé par ladite autre aile 4 du volet quand celui-ci est en position de fermeture. Ceci améliore encore l'étanchéité.

Le volet 1 présente, par exemple, un logement 20 pour l'arbre 21 d'articulation. Il s'agit, notamment, d'une articulation en rotation autour de l'axe d'articulation 16, comme cela est illustré dans à la figure 3 par la flèche repérée 22. Ledit logement se trouve, par exemple, dans une extension 23 du volet, localisée, notamment, dans la zone intermédiaire 6. Dans un tel mode de réalisation, ladite extension 23 s'étend depuis la face opposée 13 à la face d'appui 10 de l'aile d'obturation et depuis la face d'appui 12 de l'autre aile 4 du volet.

Le logement 20 est ici traversant et l'arbre 21 débouche de part et d'autre du logement 20. L'arbre 21 est relié à l'extension 23 de façon connue en soi.

L'aile d'obturation 3, l'autre aile 4, la zone intermédiaire 6 et son extension 23 forment, par exemple, une pièce unique, notamment issue de fonderie.

Ladite extension 23 du volet accueillant son arbre d'articulation 21 est localisée de façon à fermer le volume défini par la cuvette 61 et la zone borgne 36 du joint 2, c'est-à-dire, de façon à fermer ladite lame de fluide 61. Ledit corps 30 présente pour cela, par exemple au niveau de la partie 30b définissant le conduit auxiliaire 32, des logements 64 pour l'arbre 21 d'articulation du volet.

Tel que cela est illustré à la figure 4, selon la direction de l'axe d'articulation du volet, ladite aile d'obturation présente une dimension y s'étendant de part et d'autre au-delà de la dimension y' selon laquelle s'étend la zone intermédiaire 6, au moins au niveau d'une zone de jonction entre ladite zone intermédiaire et ladite aile d'obturation. La surface d'appui 10 de l'aile d'obturation 3 peut ainsi présenter une zone de contact 17, sous la forme d'une portion angulaire d'anneau, avec le joint 2, sur une première partie de la périphérie de l'ouverture 5 du joint, d'un côté dudit joint, tandis que la surface d'appui 12 de l'autre aile 4 présente, de l'autre côté du joint, une zone de contact 18, sur une partie complémentaire de la périphérie de l'ouverture 5 du joint.

La zone de contact 17 offerte par l'aile d'obturation 3 s'étend aussi, par exemple, au droit de la zone intermédiaire 6, au niveau des zones 7, 7'. On renforce ainsi l'étanchéité et on pourrait avoir une zone intermédiaire 6 qui n'affleure pas le contour de l'ouverture 5 du joint.

L'ouverture 5 du volet présente un contour sensiblement rectangulaire, de même que le volet d'obturation 3. Et la zone de contact 17 de ladite aile d'obturation 3 s'étend le long de trois des côtés de ladite ouverture. Quant à la zone de contact 18, elle s'étend le long du dernier côté. Ladite zone intermédiaire 6 est prévue en vis-à-vis du contour de ladite ouverture 5 sur une partie de deux de ses côtés opposés. Ledit autre volet 4 pourra être lui aussi rectangulaire.

Le joint 2 présente, par exemple, une partie périphérique 39 et ladite zone plane 8 est située en retrait de la partie périphérique. Un tel joint est obtenu, par exemple, par emboutissage. Ladite partie périphérique 39 pourra présenter des extensions 40 faisant bride d'accrochage sur le corps 30.

## Revendications

1. Vanne de circulation de fluide, notamment de gaz d'échappement d'un moteur de véhicule automobile, comprenant un corps (30) définissant un conduit principal (31) et un conduit auxiliaire (32) d'écoulement du fluide, débouchant dans ledit conduit principal (31), ladite vanne comprenant en outre un volet (1) mobile entre une position, dite de fermeture, empêchant la communication entre les deux conduits (31, 32), et une position dite d'ouverture, permettant la mise en communication desdits conduits (31, 32), et un joint d'étanchéité (2) sur lequel le volet (1) est en appui lorsqu'il est en position de fermeture, ledit corps (30) comprenant un logement (37) pour un moteur d'actionnement du volet (1), ledit corps (30) étant configuré pour définir une lame de fluide (38) entre ledit joint (2) et ledit logement (37), ledit joint (2) présentant une ouverture (5) pour le passage du fluide d'un conduit à l'autre et le volet étant muni d'une première (3) et d'une seconde (4) aile, ladite première aile (3), dite aile d'obturation, permettant de fermer ladite ouverture (5), lorsque le volet (1) est en position de fermeture, la première aile (3) et la seconde aile (4) sont prévues de part et d'autre du joint (2), ledit volet (1) comprenant une zone intermédiaire (6), reliant ladite première (3) et ladite seconde (4) aile, traversant ladite ouverture (5) du joint (1) lorsque le volet (1) est en position de fermeture, et ladite seconde aile (4), permettant de fermer au moins partiellement ledit premier conduit (31), lorsque le volet (1) est en position d'ouverture, **caractérisée en ce que** ledit joint (2) présente une zone borgne (36), située en vis-à-vis de ladite seconde aile (4) lorsque le volet (1) est en position de fermeture, l'ouverture (5) du joint n'étant prévue qu'au niveau de l'aile d'obturation (3), le volet (1) étant en position de fermeture, et ladite lame de fluide (38) étant prévue entre ladite zone borgne (36) du joint (2) et ledit corps (30).

2. Vanne selon la revendication 1 dans laquelle ledit corps (30) définit une cuvette (61) entre ledit joint (2) et ledit logement (37), ledit corps (30) comprenant une paroi (62) entre ledit logement et un fond (65) de ladite cuvette (61), prévu plat.

3. Vanne selon la revendication 2 dans laquelle ledit joint (2) et le fond (65) de ladite cuvette (61) sont prévus parallèles l'un à l'autre.

4. Vanne selon l'une des revendications 2 ou 3 dans laquelle ledit corps (30) comprend deux parties distinctes (30a, 30b), assujetties l'une à l'autre, chaque partie définissant un desdits conduits (31, 32), et présentant une ouverture venant en correspondance pour définir une fenêtre (33) de passage du fluide d'un conduit à l'autre, l'ouverture (5) dudit joint d'étanchéité (2) étant positionnée au niveau de ladite fenêtre.

5. Vanne selon la revendication 4 dans laquelle ladite cuvette (61) est définie par la partie (30b) définissant le conduit auxiliaire (32).

6. Vanne selon l'une des revendications 4 ou 5 dans laquelle ladite partie (30b) définissant le conduit auxiliaire (32) définit en outre ledit logement (37) pour le moteur.

## Patentansprüche

1. Fluidzirkulationsventil, insbesondere für Abgas eines Kraftfahrzeugmotors, das einen Körper (30) enthält, der einen Hauptkanal (31) und einen Nebenkanal (32) für die Strömung des Fluids definiert, der in den Hauptkanal (31) mündet, wobei das Ventil außerdem eine Klappe (1), die zwischen einer so genannten Schließstellung, die die Verbindung zwischen den zwei Kanälen (31, 32) verhindert, und einer so genannten Öffnungsstellung beweglich ist, die die Verbindung der Kanäle (31, 32) erlaubt, und eine Dichtung (2) enthält, auf der die Klappe (1) aufliegt, wenn sie in der Schließstellung ist, wobei der Körper (30) einen Raum (37) für einen Betätigungsmotor der Klappe (1) enthält, wobei der Körper (30) konfiguriert ist, eine Fluidschicht (38) zwischen der Dichtung (2) und der Aufnahme (37) zu definieren, wobei die Dichtung (2) eine Öffnung (5) für den Übergang des Fluids von einem Kanal zum anderen aufweist, und die Klappe mit einem ersten (3) und einem zweiten (4) Flügel versehen ist, wobei der erste Flügel (3), Verschlussflügel genannt, es ermöglicht, die Öffnung (5) zu verschließen, wenn die Klappe (1) in der Schließstellung ist, wobei der erste Flügel (3) und der zweite Flügel (4) zu beiden Seiten der Dichtung (2) vorgesehen sind, wobei die Klappe (1) eine den ersten (3) und den zweiten (4) Flügel verbindenden Zwischenzone (6) enthält, die die Öffnung (5) der Dichtung (1) durchquert, wenn die Klappe (1) in der Schließstellung ist, und der zweite Flügel (4) es ermöglicht, den ersten Kanal (31) zumindest teilweise zu schließen, wenn die Klappe (1) in der Öffnungsstellung ist, **dadurch gekennzeichnet, dass** die Dichtung (2) eine einseitig offene Zone (36) aufweist, die sich gegenüber dem zweiten Flügel (4) befindet, wenn die Klappe (1) in der Schließstellung ist, wobei die Öffnung (5) der Dichtung nur im Bereich des Verschlussflügels (3) vorgesehen ist, wobei die Klappe (1) in der Schließstellung ist, und die Fluidschicht (38) zwischen der einseitig offenen Zone (36) der Dichtung (2) und dem Körper (30) vorgesehen ist.

2. Ventil nach Anspruch 1, wobei der Körper (30) eine Mulde (61) zwischen der Dichtung (2) und dem Raum (37) definiert, wobei der Körper (30) eine Wand (62) zwischen dem Raum und einem Boden (65) der Mulde (61) enthält, der flach vorgesehen ist.

3. Ventil nach Anspruch 2, wobei die Dichtung (2) und der Boden (65) der Mulde (61) parallel zueinander vorgesehen sind.

4. Ventil nach einem der Ansprüche 2 oder 3, wobei der Körper (30) zwei aneinander befestigte verschiedene Teile (30a, 30b) enthält, wobei jeder Teil einen der Kanäle (31, 32) definiert, und eine Öffnung aufweist, die in Übereinstimmung kommt, um ein Durchgangsfenster (33) für das Fluid von einem Kanal zum anderen zu definieren, wobei die Öffnung (5) der Dichtung (2) im Bereich des Fensters positioniert ist.

5. Ventil nach Anspruch 4, wobei die Mulde (61) durch den den Nebenkanal (32) definierenden Teil (30b) definiert wird.

6. Ventil nach einem der Ansprüche 4 oder 5, wobei der den Nebenkanal (32) definierende Teil (30b) außerdem den Raum (37) für den Motor definiert.

## Claims

1. Fluid circulation valve, in particular for exhaust gases from a motor vehicle engine, comprising a body (30) that defines a main duct (31) and an auxiliary duct (32) for the flow of the fluid, opening into said main duct (31), said valve also comprising a flap (1) that is able to move between a position, known as the closed position, preventing communication between the two ducts (31, 32), and a position, known as the open position, that allows communication between said ducts (31, 32), and a seal (2) against which the flap (1) bears when it is in the closed position, said body (30) comprising a housing (37) for an actuating motor of the flap (1), said body (30) being configured to define a fluid gap (38) between said seal (2) and said housing (37), said seal (2) having an opening (5) for the fluid to pass from one duct to the other and the flap is provided with a first wing (3) and a second wing (4), said first wing (3), known as the shutoff wing, making it possible to close said opening (5) when the flap (1) is in the closed position, the first wing (3) and the second wing (4) being provided on either side of the seal (2), said flap comprising an intermediate zone (6), connecting said first wing (3) and said second wing (4), that passes through said opening (5) in the seal (1) when the flap (1) is in the closed position, and said second wing (4) making it possible to at least partially close said first duct (31) when the flap (1) is in the open position, **characterized in that** said seal (2) has a blind zone (36) situated facing said wing (4) when the flap (1) is in the closed position, the opening (5) of the seal (2) being provided only at the level of the shutoff wing (3), the flap (1) being in the closed position, and said fluid gap (38) is provided between said blind zone (36) of the seal and said body (30).

2. Valve according to Claim 1, in which said body (30) defines a dish (61) between said seal (2) and said housing (37), said body (30) comprising a wall (62) between said housing and a bottom (65), designed to be flat, of said dish (61).

3. Valve according to Claim 2, in which said seal (2) and the bottom (65) of said dish (61) are provided parallel to one another.

4. Valve according to either of Claims 2 and 3, in which said body (30) comprises two separate parts (30a, 30b) secured to one another, each part defining one of said ducts (31, 32) and having an opening that comes into alignment in order to define an aperture (33) for the fluid to pass from one duct to the other, the opening (5) in said seal (2) being positioned in the region of said aperture.

5. Valve according to Claim 4, in which said dish (61) is defined by the part (30b) that defines the auxiliary duct (32).

6. Valve according to either of Claims 4 and 5, in which said part (30b) that defines the auxiliary duct (32) also defines said housing (37) for the motor.
